# EUROPÄISCHE PATENTSCHRIFT

(11) **EP 1 601 559 B1**
(45) Veröffentlichungstag und Bekanntmachung des Hinweises auf die Patenterteilung: **25.04.2012**
(21) Anmeldenummer: 04702642.2
(22) Anmeldetag: 16.01.2004
(51) Int. Cl.: B60S 1/32, B60S 1/04

(54) **WISCHVORRICHTUNG**
WIPER DEVICE
SYSTEME D'ESSUIE-GLACE

(30) Priorität: 28.02.2003 DE 10308782
(43) Veröffentlichungstag der Anmeldung: 07.12.2005
(73) Patentinhaber: ROBERT BOSCH GMBH, 70442 Stuttgart (DE)
(72) Erfinder: WEILER, Michael, 76131 Karlsruhe (DE); KRAUS, Achim, 77815 Buehl (DE); ZIMMER, Joachim, 77880 Sasbach (DE); DIETRICH, Jan, 77815 Buehl (DE)
(86) Internationale Anmeldenummer: PCT/DE2004/000050
(87) Internationale Veröffentlichungsnummer: WO 2004/076250

(56) Entgegenhaltungen:
- WO-A-03/099620
- DE-A- 4 019 494
- US-A- 2 722 708
- US-A- 3 387 316
- US-A- 3 480 985
- US-A- 3 480 986

## Beschreibung

### Stand der Technik

Die Erfindung geht aus von einer Wischvorrichtung nach dem Oberbegriff des Anspruchs 1.

Aus der DE 31 42 716 C2 ist eine gattungsbildende Wischvorrichtung bekannt. Die Wischvorrichtung umfasst einen Wischarm mit einer aus einem federelastischen Kunststoff gefertigten Wischstange, die an einem Ende gelenkfrei mit einem Befestigungsteil verbunden und an deren freien Ende ein Wischblatt befestigbar ist. Die Wischstange weist über ihre Länge ein konstantes Profil mit einem Kunststoffkern und einem den Kunststoffkern umschließenden Kunststoffmantel auf.

Eine gattungsgemäße Wischvorrichtung ist aus dem Dokument US-A-3480985 bekannt.

### Vorteile der Erfindung

Die Erfindung geht aus von einer Wischvorrichtung, insbesondere für ein Kraftfahrzeug, die einen Wischarm mit zumindest einem federelastischen Teilbereich aufweist, der eine Wischstange und eine mit der Wischstange verbundene Befestigungseinheit umfasst.

Erfindungsgemäß weist die Befestigungseinheit und/oder die Wischstange wenigstens eine Sollbruchstelle zur Ermöglichung der Auslenkung im Kollisionsfall auf. So kann eine besonders einfache und kostengünstige Lösung, insbesondere ohne zusätzliche Bauteile, erreicht werden.

Ferner wird erfindungsgemäß vorgeschlagen, dass die Wischstange ausgehend von ihrer Betriebsstellung in Richtung der von der zu wischenden Fläche aufgespannten Ebene zumindest im Kollisionsfall schwenkbar gelagert ausgeführt ist. Es kann ein besonders funktionssicherer Betrieb und eine im Kollisionsfall sicher auslösende Schutzfunktion erreicht werden. Zudem kann eine zerstörungsfreie Schutzfunktion oder zumindest eine Schutzfunktion erreicht werden, bei der nach einem Kollisionsfall ein Betrieb der Wischvorrichtung möglich ist. Dabei kann die Wischstange stets in Richtung der Ebene auslenkbar sein oder kann bei einem herkömmlichen Betrieb durch ein Element, insbesondere spielfrei, fixiert sein, welches in einem Kollisionsfall die Wischstange freigibt.

In einer weiteren Ausgestaltung der Erfindung wird vorgeschlagen, dass die Wischstange in ihrer Betriebsstellung in eine von der Ebene abgewandte Richtung durch einen Anschlag in ihrer Bewegung begrenzt ist, wodurch vorteilhaft eine Spannkraft im federelastischen Teilbereich der Wischstange aufgebaut und derselbe zum Aufbau einer Auflagekraft genutzt werden kann. Grundsätzlich ist jedoch auch denkbar, dass eine zusätzliche Federeinheit zur Erzeugung einer Auflagekraft vorgesehen ist.

Zur Realisierung der schwenkbaren Lagerung der Wischstange kann ein Befestigungsteil der Befestigungseinheit oder vorteilhaft die Wischstange selbst relativ zur Befestigungseinheit schwenkbar ausgeführt sein, wobei im letzteren Fall eine besonders flachbauende Konstruktion mit wenigen Bauteilen erreicht werden kann.

Ist die Wischstange in einem Bauteil der Befestigungseinheit schwenkbar gelagert, können wiederum Bauraum und Bauteile eingespart werden, und zwar insbesondere, wenn an die Wischstange eine Lagerachse angeformt ist.

Eine zu der in Anspruch 1 vorgeschlagenen Lösung verwandte technologische Lösung besteht ferner darin, dass die Wischstange in zumindest einem Bereich mit einem Aufprallschutzelement umgeben ist, das im Vergleich zur Wischstange in diesem Bereich aus einem weicheren Material gebildet ist. Gemäß der Lösung nach Anspruch 1 kann ein Verletzungsgrad einer Person beim Aufprall im Bereich der Wischvorrichtung zumindest reduziert werden. Die entsprechende Lösung kann grundsätzlich bei verschiedenen, dem Fachmann als sinnvoll erscheinenden Wischvorrichtungen realisiert werden, jedoch besonders vorteilhaft bei Wischvorrichtungen, die eine Wischstange aufweisen, die zumindest im vom Aufprallschutzelement umgebenen Bereich aus Blech gebildet ist, wodurch Blechkanten vorteilhaft abgedeckt und Nachbearbeitungsschritte der Blechkanten zumindest weitgehend vermieden werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wischvorrichtung schräg von unten im unbelasteten Zustand,
- Fig. 2: die Wischvorrichtung aus Fig. 1 schräg von oben im belasteten Zustand,
- Fig. 3: einen vergrößerten Ausschnitt III aus Fig. 1,
- Fig. 4: einen Schnitt entlang der Linie IV-IV in Fig. 3,
- Fig. 5: einen Schnitt entlang der Linie V-V in Fig. 3,
- Fig. 6: die Wischvorrichtung aus Fig. 2 in einer Seitenansicht vor einem Kollisionsfall,
- Fig. 7: die Wischvorrichtung aus Fig. 2 in einer Seitenansicht bei einem Kollisionsfall,
- Fig. 8: die Wischvorrichtung aus Fig. 2 in einer alternativen Montagestellung bei einem Kollisionsfall,
- Fig. 9 - 12: Schnittdarstellungen durch alternative Wischvorrichtungen,
- Fig. 13: eine zu Fig. 1 alternative Wischvorrichtung mit einem Gelenkteil schräg von oben,
- Fig. 14: einen Längsschnitt durch die Wischvorrichtung aus Fig. 13,
- Fig. 15: die Wischvorrichtung gemäß Fig. 14 bei einem Kollisionsfall,
- Fig. 16: eine zu Fig. 1 alternative Wischvorrichtung mit einer in einer Befestigungseinheit schwenkbar gelagerten Wischstange in einer Draufsicht,
- Fig. 17: einen Schnitt entlang der Linie XVII-XVII in Fig. 16 vor einem Kollisionsfall,
- Fig. 18: die Wischvorrichtung gemäß Fig. 17 bei einem Kollisionsfall,
- Fig. 19: die Wischstange der Wischvorrichtung aus Fig. 16 in demontiertem Zustand,
- Fig. 20: eine zu Fig. 16 alternative nicht beanspruchte Wischvorrichtung mit einem Filmscharnier in einer Draufsicht,
- Fig. 21: einen Schnitt entlang der Linie XXI-XXI in Fig. 20,
- Fig. 22: einen Schnitt entlang der Linie XXII-XXII in Fig. 21,
- Fig. 23: die Wischvorrichtung gemäß Fig. 21 bei einem Kollisionsfall,
- Fig. 24: eine zu Fig. 20 alternative, nicht beanspruchte Wischvorrichtung mit einer einen geschwächten Bereich aufweisenden Wischstange,
- Fig. 25: einen Schnitt entlang der Linie XXV-XXV in Fig. 24,
- Fig. 26: die Wischvorrichtung gemäß Fig. 25 bei einem Kollisionsfall und
- Fig. 27: eine Wischstange der mischvorrichtung aus Fig. 24 in demontiertem Zustand.

### Beschreibung der Ausführungsbeispiele

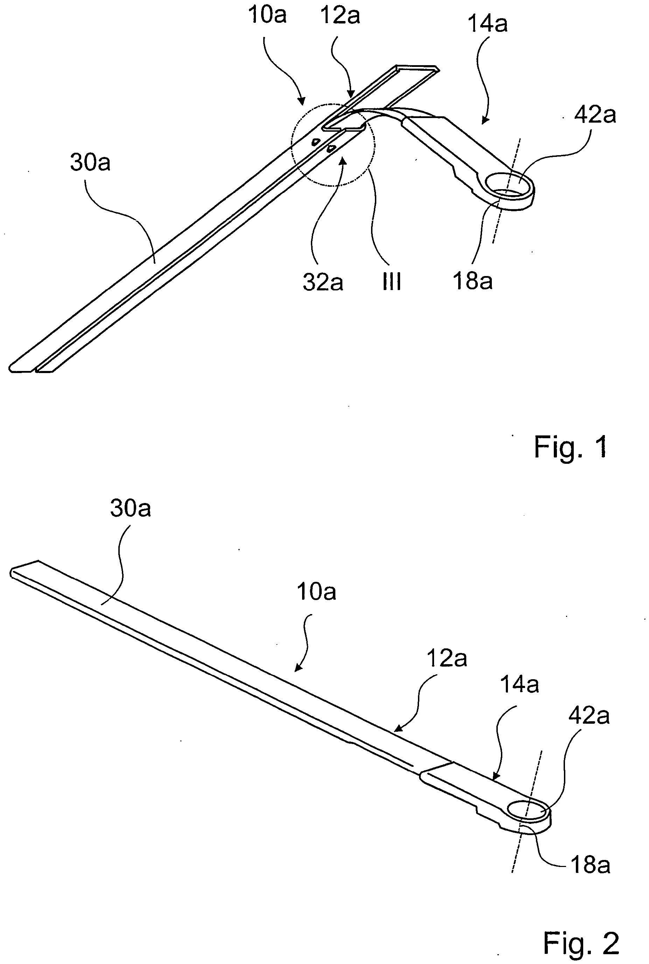

In den Figuren 1 bis 8 ist eine Wischvorrichtung für ein Kraftfahrzeug mit einem Wischarm 10a dargestellt. Der Wischarm 10a umfasst eine Wischstange 12a aus einem Federstahlblech und eine aus einem Biegestanzteil gebildete Befestigungseinheit 14a aus einem biegesteifen Stahlblech.

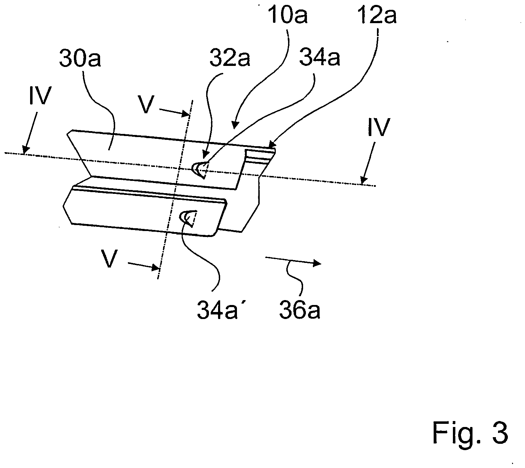

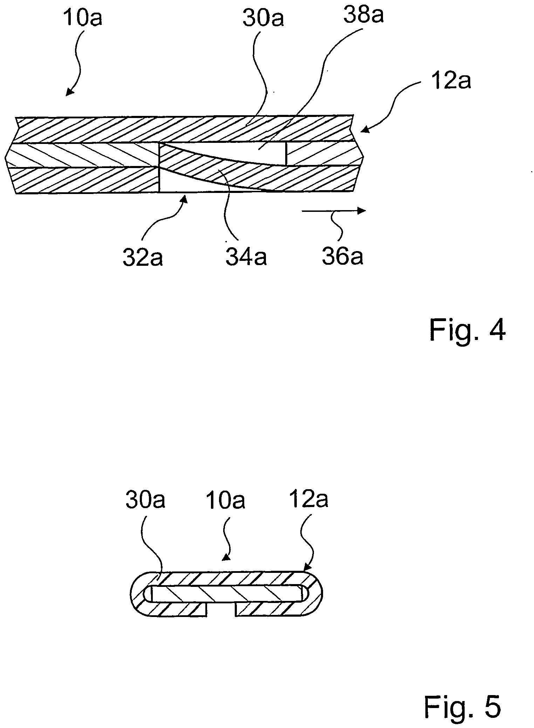

Die Wischstange 12a ist von einem Aufprallschutzelement 30a umgeben, das im Vergleich zur Wischstange 12a aus einem weicheren Material gebildet ist, und zwar aus Kunststoff. Die Wischstange 12a weist ein ebenes Rechteckprofil auf und ist an einem ersten Ende mittels eines so genannten Umlappens der Befestigungseinheit 14a über eine Klemmverbindung in der Befestigungseinheit 14a gehalten. Das Aufprallschutzelement 30a ist von einem zweiten Ende der Wischstange 12a her auf dieselbe aufgeschoben. Das Aufprallschutzelement 30a weist im Wesentlichen ein zu einer Unterseite hin offenes C-Profil auf (Figuren 3 und 5).

Das Aufprallschutzelement 30a ist über eine Rastverbindung 32a auf der Wischstange 12a fixiert. Am Aufprallschutzelement 30a sind an einem der Befestigungseinheit 14a zugewandten Ende in einer im montierten Zustand zu einer zu wischenden Fläche einer Windschutzscheibe 44a weisenden unteren Wandung zwei Rastmittel 34a, 34a' angeformt, die jeweils von einem kreisrunden, teilweise freigeschnittenen Abschnitt gebildet sind, der entgegen einer Aufschubrichtung 36a des Aufprallschutzelements 30a eine ansteigende, über eine Innenseite eines Aufnahmebereichs des Aufprallschutzelements 30a hinausragende Schrägfläche bildet (Figuren 3 und 4).

Trifft das Aufprallschutzelement 30a beim Einschieben mit seinen Rastmitteln 34a, 34a' auf das freie Ende der Wischstange 12a, werden die Rastmittel 34a, 34a' senkrecht zur Aufschubrichtung 36a und senkrecht zur Unterseite des Aufprallschutzelements 30a ausgelenkt und rasten anschließend bei einer fortgeführten Aufschubbewegung in von kreisrunden Durchgangsöffnungen gebildete Rastmittel 38a der Wischstange 12a ein (Figur 4). Anstatt dass die Rastmittel 34a, 34a' ausgelenkt werden, ist denkbar, dass die Wischstange 12a beim Rastvorgang ausgelenkt wird. Hierfür könnten möglicherweise Freiräume an einer Deckseite des Aufprallschutzelements 30a vorgesehen werden, in die die Wischstange 12a beim Rastvorgang ausgelenkt werden kann bzw. ausweichen kann. Gleichzeitig mit dem Einrasten kommt die Wischstange 12a mit ihrer Stirnseite an einem in den Aufnahmebereich des Aufprallschutzelements 30a ragenden, an dasselbe angeformten, nicht näher dargestellten Anschlag zur Anlage. Das Aufprallschutzelement 30a ist sicher auf der Wischstange 12a fixiert.

Das Aufprallschutzelement 30a versteift im Hinblick auf einen Wischkreis im radial äußeren Bereich die Wischstange 12a, wobei in einem radial inneren Hauptbiegebereich mit einer Länge zwischen 5 cm und 20 cm unmittelbar vor der Befestigungseinheit 14a das Aufprallschutzelement 30a auf der Unterseite des Wischarms 10a ausgespart ist. Anstatt aus einem im Wesentlichen biegesteifen Kunststoff könnte das Aufprallschutzelement 30a auch vorteilhaft aus einem biegeweichen Kunststoff oder aus Gummi hergestellt sein, wodurch eine besonders vorteilhafte Dämpfung in einem Kollisionsfall erzielt werden könnte. Denkbar ist ferner, dass das Aufprallschutzelement von einem Mehrkomponentenbauteil gebildet wird, das eine vorteilhafte Versteifung und eine vorteilhafte Dämpfung im Kollisionsfall bewirkt.

In Figur 1 ist der Wischarm 10a in einem unbelasteten Zustand dargestellt, wobei in Figur 2 der Wischarm 10a in einem belasteten Betriebszustand dargestellt ist. Im Betrieb ist der Wischarm 10a im Wesentlichen gerade gebogen und bewirkt dadurch eine Auflagekraft eines Wischblatts auf die zu wischende Fläche.

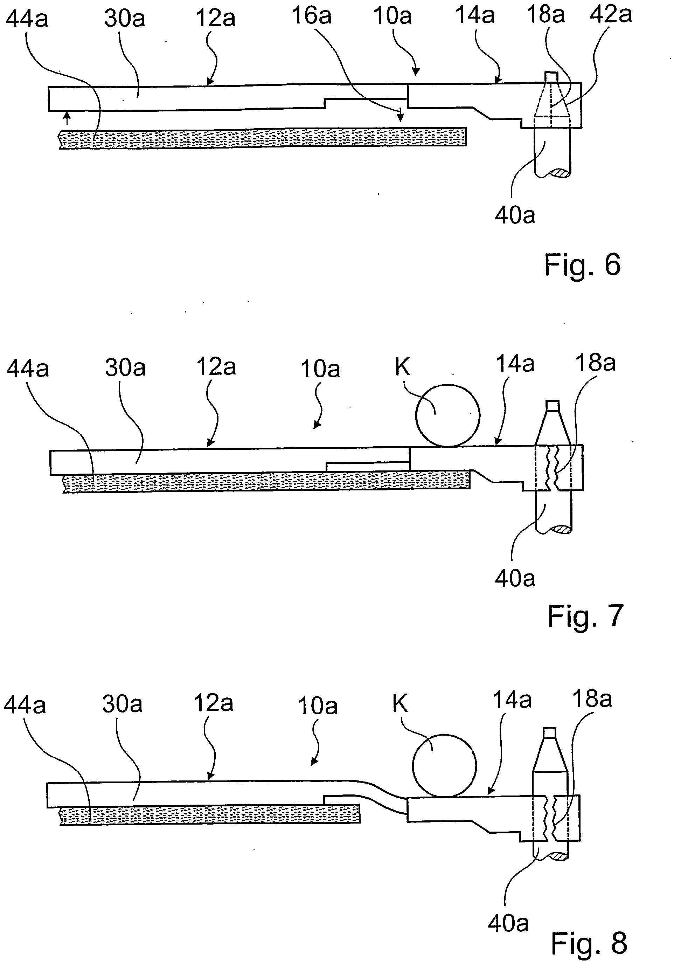

Erfindungsgemäß ist am zum freien Ende des Wischarms 10a weisenden Ende der Befestigungseinheit 14a die Wischstange 12a für einen Kollisionsfall mit einem Gegenstand K ausgehend von ihrer Betriebsstellung in Richtung 16a einer von einer zu wischenden Fläche aufgespannten Ebene auslenkbar ausgeführt (Figuren 6 und 7). Hierfür weist die Befestigungseinheit 14a im Bereich einer Lagerstelle 42a zur Kopplung des Wischarms 10a mit einer Antriebswelle 40a eine Sollbruchstelle 18a auf. Trifft der Gegenstand K insbesondere im Bereich der Befestigungseinheit 14a auf den Wischarm 10a, bricht die Befestigungseinheit 14a im Bereich der Lagerstelle 42a und die Wischstange 12a kann gemeinsam mit der Befestigungseinheit 14a in Richtung 16a zur von der zu wischenden Fläche aufgespannten Ebene ausgelenkt werden, und zwar bis die Befestigungseinheit 14a auf der zu wischenden Fläche zur Auflage kommt.

Wird die Antriebswelle 40a mit einem größeren Abstand zur Windschutzscheibe 44a montiert, und zwar in der Weise, dass die Befestigungseinheit 14a in Richtung zum freien Ende des Wischarms 10a vor der Windschutzscheibe 44a endet, kann in einem Kollisionsfall die Befestigungseinheit 14a an der Windschutzscheibe 44a vorbei geführt und dadurch vorteilhaft versenkt werden (Figur 8). Die Wischstange 12a kann dabei einen Hubunterschied zwischen einem über der Windschutzscheibe 44a befindlichen und einem mit der Befestigungseinheit 14a unmittelbar verbundenen Teil durch eine federelastische Verformung ausgleichen.

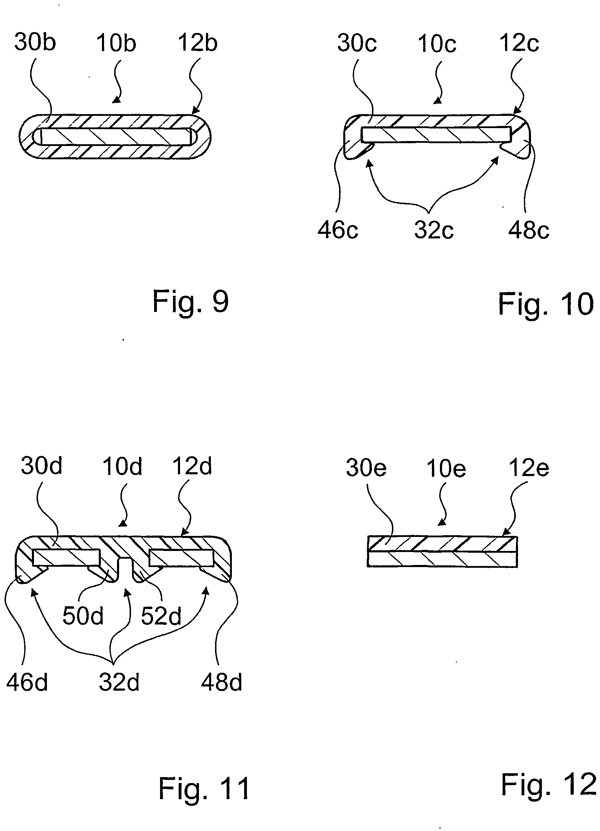

In den Figuren 9 bis 12 sind Schnittdarstellungen durch zu Figur 1 alternative Wischvorrichtungen dargestellt. Bezüglich gleichbleibender Merkmale und Funktionen kann auf die Beschreibung zum Ausführungsbeispiel in den Figuren 1 bis 8 verwiesen werden. Die nachfolgende Beschreibung beschränkt sich im Wesentlichen auf die Unterschiede zum Ausführungsbeispiel in den Figuren 1 bis 8.

Die Wischvorrichtung in Figur 9 weist einen Wischarm 10b auf, der eine nicht näher dargestellte, der Befestigungseinheit 14a entsprechende Befestigungseinheit und eine von einer Blattfeder gebildete Wischstange 12b umfasst, die von einem Aufprallschutzelement 30b aus Kunststoff umhüllt ist. Das Aufprallschutzelement 30b weist ein geschlossenes, hülsenförmiges Profil auf.

Die Wischvorrichtung in Figur 10 weist einen Wischarm 10c auf, der eine nicht näher dargestellte, der Befestigungseinheit 14a entsprechende Befestigungseinheit und eine von einer Blattfeder gebildete Wischstange 12c umfasst, an der ein Aufprallschutzelement 30c eingerastet ist. Das Aufprallschutzelement 30c weist im Wesentlichen ein zu einer Unterseite offenes C-Profil auf. Bei der Montage wird das Aufprallschutzelement 30c auf eine Deckseite der Wischstange 12c aufgesetzt und anschließend mit einer Druckbewegung senkrecht zur Deckseite der Wischstange 12c mit seinen als Rasthaken ausgebildeten Schenkeln 46c, 48c an der Wischstange 12c eingerastet.

Die Wischvorrichtung in Figur 11 weist einen Wischarm 10d auf, der eine nicht näher dargestellte, der Befestigungseinheit 14a entsprechende Befestigungseinheit und eine von einer Blattfeder gebildete Wischstange 12d umfasst. Ein an der Wischstange 12d eingerastetes Aufprallschutzelement 30d weist im Wesentlichen ein aus zwei C-Profilen zusammengesetztes, zu einer Unterseite hin offenes Profil auf. Bei der Montage wird das Aufprallschutzelement 30d auf eine Deckseite der geschlitzten Wischstange 12d aufgesetzt und anschließend mit einer Druckbewegung senkrecht zur Deckseite der Wischstange 12d mit seinen als Rasthaken ausgebildeten Schenkeln 46d, 48d, 50d, 52d an der Wischstange 12d eingerastet, wobei die Schenkel 50d, 52d in einen Schlitz der Wischstange 12d eingreifen.

Die Wischvorrichtung in Figur 12 weist einen Wischarm 10e auf, der eine nicht näher dargestellte, der Befestigungseinheit 14a entsprechende Befestigungseinheit und eine von einer Blattfeder gebildete Wischstange 12e umfasst, auf deren Deckseite ein von einem ebenen Rechteckprofil gebildetes Aufprallschutzelement 30e aufgeklebt ist.

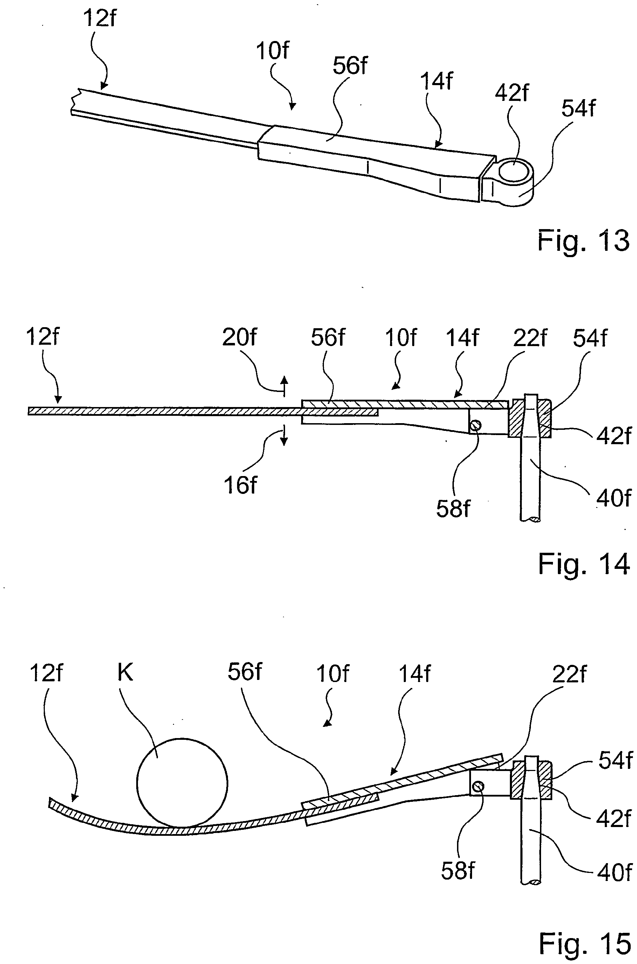

In den Figuren 13 bis 15 ist eine Wischvorrichtung mit einem Wischarm 10f dargestellt, der eine von einer Blattfeder gebildete Wischstange 12f und eine Befestigungseinheit 14f mit einem Befestigungsteil 54f und einem Gelenkteil 56f umfasst. Die Wischstange 12f ist am Gelenkteil 56f befestigt und ist über das Gelenkteil 56f, das über eine Gelenkachse 58f mit dem Befestigungsteil 54f verbunden ist, ausgehend von ihrer Betriebsstellung in Richtung 16f einer von einer zu wischenden Fläche aufgespannten Ebene schwenkbar gelagert ausgeführt (Figur 14 und 15). In eine von der zu wischenden Fläche aufgespannten Ebene abgewandte Richtung 20f ist die Wischstange 12f in ihrer Betriebsstellung durch einen Anschlag 22f in ihrer Bewegung begrenzt (Figur 14). Der Anschlag 22f wird von einer Deckseite des Befestigungsteils 54f gebildet, an den ein zwei Schenkel des als U-Profil ausgebildeten Gelenkteils 56f verbindendes Wandteil in der Betriebsstellung anschlägt (Figur 14).

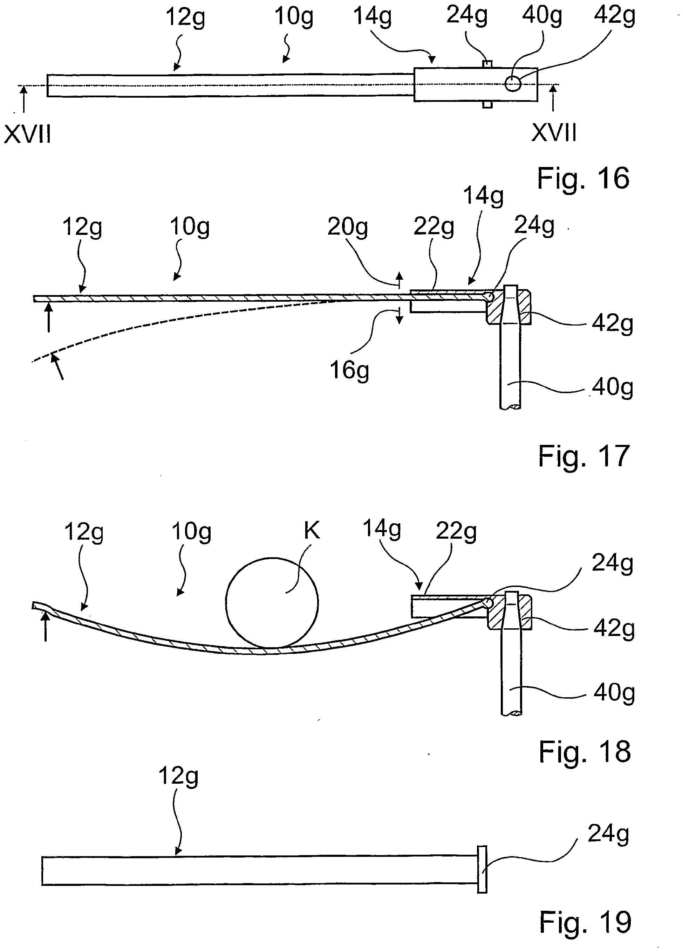

In den Figur 16 bis 19 ist eine Wischvorrichtung mit einem Wischarm 10g dargestellt, der eine von einer Blattfeder gebildete Wischstange 12g und eine von einem einzelnen Bauteil gebildete Befestigungseinheit 14g umfasst. Die Wischstange 12g ist ausgehend von ihrer Betriebsstellung relativ zur Befestigungseinheit 14g in Richtung 16g einer von einer zu wischenden Fläche aufgespannten Ebene schwenkbar gelagert (Figuren 17 und 18). An einem zur Befestigungseinheit 14g weisenden Ende ist in einem Stanzprozess an die Wischstange 12g eine Lagerachse 24g angeformt (Figur 19), über die die Wischstange 12g in einer entsprechenden Ausnehmung im die Befestigungseinheit 14g bildenden Bauteil schwenkbar gelagert ist (Figuren 17 und 18).

Die Wischstange 12g ist in ihrer Betriebsstellung in eine von der zu wischenden Fläche aufgespannten Ebene abgewandte Richtung 20g durch einen Anschlag 22g in ihrer Bewegung begrenzt (Figur 17).

Das die Befestigungseinheit 14g bildende Bauteil weist einen im Wesentlichen zylinderförmigen Teilbereich mit einer Lagerstelle 42g für eine Antriebswelle 40g und einen an den zylinderförmigen Teilbereich anschließenden, von einem zu einer Unterseite hin offenen U-Profil gebildeten Fortsatz auf. Die Ausnehmung zur Aufnahme der Lagerachse 24g der Wischstange 12g ist im Ansatz des Fortsatzes an den zylinderförmigen Teilbereich im Wesentlichen in den zylinderförmigen Teilbereich eingebracht. Die Wischstange 12g ist durch zwei Schenkel des Fortsatzes in ihrer Schwenkbewegung geführt und ist in ihrer Betriebsstellung durch ein die Schenkel verbindendes und einen Anschlag 22g bildendes Wandteil des Fortsatzes in ihrer Schwenkbewegung in die von der Ebene abgewandte Richtung 20g begrenzt (Figur 17).

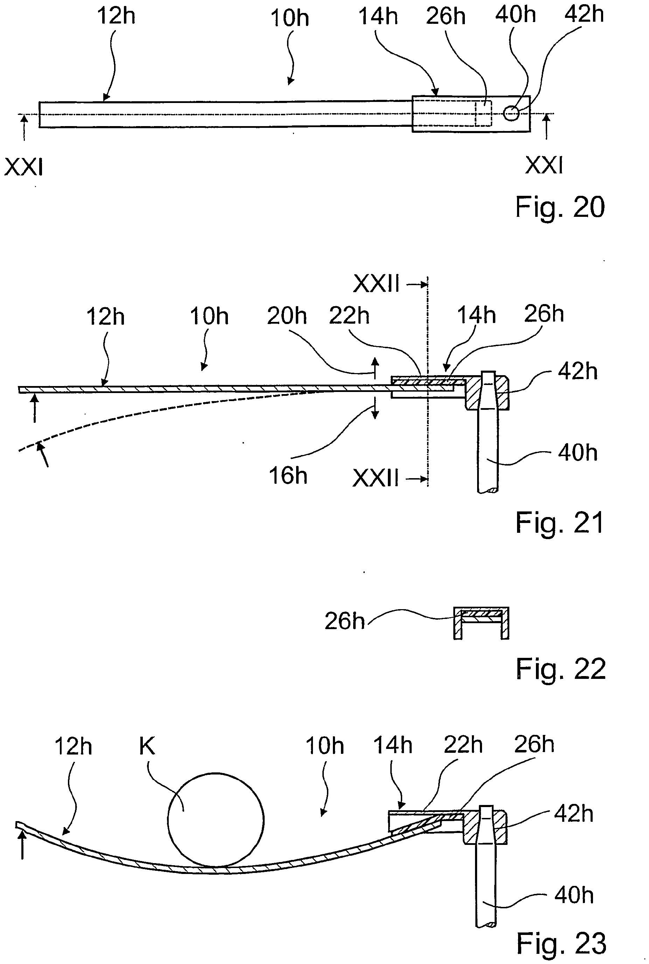

In den Figuren 20 bis 23 ist eine nicht beanspruchte Wischvorrichtung mit einem Wischarm 10h dargestellt, der eine von einer Blattfeder gebildete Wischstange 12h und eine von einem einzelnen Bauteil gebildete Befestigungseinheit 14h umfasst. Die Wischstange 12h ist ausgehend von ihrer Betriebsstellung relativ zur Befestigungseinheit 14h in Richtung 16h einer von einer zu wischenden Fläche aufgespannten Ebene schwenkbar gelagert (Figuren 21 und 23). Das die Befestigungseinheit 14h bildende Bauteil weist einen im Wesentlichen zylinderförmigen Teilbereich mit einer Lagerstelle 42h für eine Antriebswelle 40h und einen an den zylinderförmigen Teilbereich anschließenden, von einem zu einer Unterseite hin offenen U-Profil gebildeten Fortsatz auf. Die Wischstange 12h ist über ein Filmscharnier 26h aus Kunststoff schwenkbar gelagert, das mit einem ersten Ende im Fortsatz und einem zweiten Ende am zur Befestigungseinheit 14h weisenden Ende der Wischstange 12h befestigt ist. Das Filmscharnier 26h ist über Schweißverbindungen mit dem Fortsatz und der Wischstange 12h verbunden, könnte jedoch auch über andere, dem Fachmann als sinnvoll erscheinende stoffschlüssige, kraftschlüssige und/oder formschlüssige Verbindungen mit den Bauteilen verbunden sein, wie beispielsweise über Klemmverbindungen, Schraubverbindungen, Nietverbindungen, Klebeverbindungen usw.

Die Wischstange 12g ist durch zwei Schenkel des Fortsatzes in ihrer Schwenkbewegung geführt und ist in ihrer Betriebsstellung durch ein die Schenkel verbindendes und einen Anschlag 22h bildendes Wandteil des Fortsatzes in ihrer Schwenkbewegung in die von der Ebene abgewandte Richtung 20g begrenzt (Figuren 21 und 22).

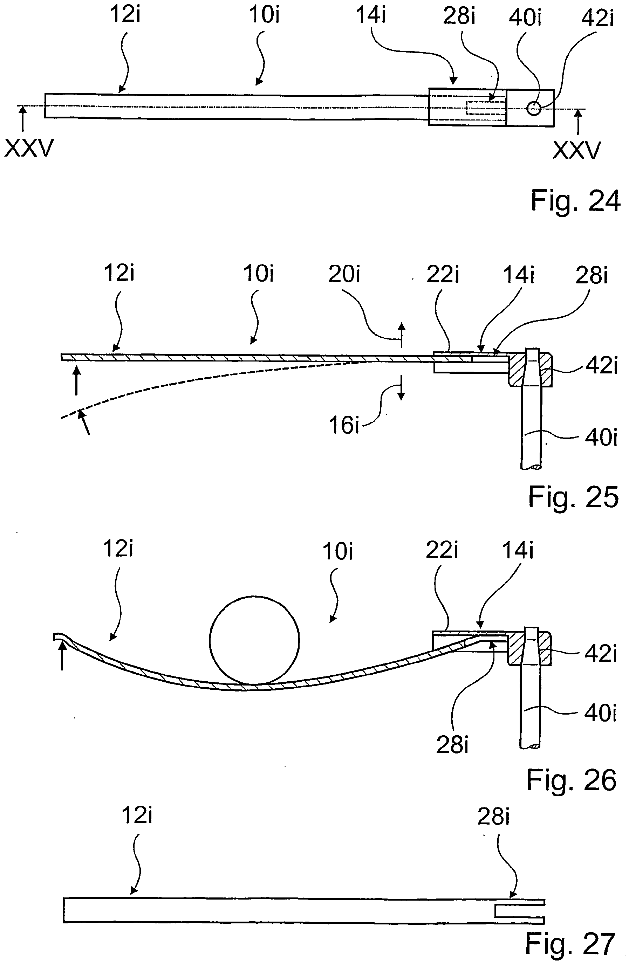

In den Figuren 24 bis 27 ist eine nicht beanspruchte Wischvorrichtung mit einem Wischarm 10i dargestellt, der eine von einer Blattfeder gebildete Wischstange 12i und eine von einem einzelnen Bauteil gebildete Befestigungseinheit 14i umfasst. Die Wischstange 12i ist ausgehend von ihrer Betriebsstellung relativ zur Befestigungseinheit 14i in Richtung 16i einer von einer zu wischenden Fläche aufgespannten Ebene schwenkbar gelagert (Figuren 25 und 26). Das die Befestigungseinheit 14i bildende Bauteil weist einen im Wesentlichen zylinderförmigen Teilbereich mit einer Lagerstelle 42i für eine Antriebswelle 40i und einen an den zylinderförmigen Teilbereich anschließenden, von einem zu einer Unterseite hin offenen U-Profil gebildeten Fortsatz auf. Die Wischstange 12i weist am zum zylinderförmigen Teilbereich weisenden Ende einen durch eine Ausnehmung geschwächten Bereich 28i mit einer geringeren Biegesteifigkeit auf. Die Wischstange 12i ist mit ihrem zum zylinderförmigen Teilbereich weisenden Ende im Fortsatz befestigt und der Bereich 28i ist als Scharnier nutzbar.

Die Wischstange 12i ist durch zwei Schenkel des Fortsatzes in ihrer Schwenkbewegung geführt und ist in ihrer Betriebsstellung durch ein die Schenkel verbindendes und einen Anschlag 22i bildendes Wandteil des Fortsatzes in ihrer Schwenkbewegung in die von der Ebene abgewandte Richtung 20i begrenzt (Figuren 25 und 26).

### Bezugszeichen

- 10: Wischarm
- 12: Wischstange
- 14: Befestigungseinheit
- 16: Richtung
- 18: Sollbruchstelle
- 20: Richtung
- 22: Anschlag
- 24: Lagerachse
- 26: Filmscharnier
- 28: Bereich
- 30: Aufprallschutzelement
- 32: Rastverbindung
- 34: Rastmittel
- 36: Aufschubrichtung
- 38: Rastmittel
- 40: Antriebswelle
- 42: Lagerstelle
- 44: Windschutzscheibe
- 46: Schenkel
- 48: Schenkel
- 50: Schenkel
- 52: Schenkel
- 54: Befestigungsteil
- 56: Gelenkteil
- 58: Gelenkachse
- K: Gegenstand

## Patentansprüche

1. Wischvorrichtung, insbesondere für ein Kraftfahrzeug, die einen Wischarm (10a - 10i) mit zumindest einem federelastischen Teilbereich aufweist, der im Betrieb im Wesentlichen derart gerade gebogen angeordnet ist, dass eine Auflagekraft eines Wischblatts auf eine zu wischende Fläche bewirkt wird, und der eine Wischstange (12a - 12i) und eine mit der Wischstange (12a - 12i) verbundene Befestigungseinheit (14a - 14i) umfasst, wobei am zum freien Ende des Wischarms (10a - 10i) weisenden Ende der Befestigungseinheit (14a - 14i) wenigstens die Wischstange (12a - 12i) zumindest für einen Kollisionsfall mit einem Gegenstand (K) ausgehend von ihrer Betriebsstellung zumindest in Richtung (16a - 16i) einer von einer zu wischenden Fläche aufgespannten Ebene auslenkbar ausgeführt ist, **dadurch gekennzeichnet, dass** die Befestigungseinheit (14a) und/oder die Wischstange wenigstens eine Sollbruchstelle (18a) zur Ermöglichung der Auslenkung im Kollisionsfall aufweist, und/oder zumindest die Wischstange (12f - 12i) ausgehend von ihrer Betriebsstellung in Richtung (16f - 16i) der von der zu wischenden Fläche aufgespannten Ebene zumindest im Kollisionsfall schwenkbar gelagert ausgeführt ist.

2. Wischvorrichtung nach Anspruch 1, **dadurch gekennzeichnet, dass** die Wischstange (12f - 12i) in ihrer Betriebsstellung in eine von der Ebene abgewandte Richtung (20f - 20i) durch einen Anschlag (22f - 22i) in ihrer Bewegung begrenzt ist.

3. Wischvorrichtung nach Anspruch 1 oder 2, **dadurch gekennzeichnet, dass** die Wischstange (12g - 12i) relativ zur Befestigungseinheit (14g - 14i) schwenkbar gelagert ist.

4. Wischvorrichtung nach Anspruch 3, **dadurch gekennzeichnet, dass** die Wischstange (12g) in einem Bauteil der Befestigungseinheit (14g) schwenkbar gelagert ist.

5. Wischvorrichtung nach Anspruch 4, **dadurch gekennzeichnet, dass** an die Wischstange (12g) eine Lagerachse (24g) angeformt ist.

6. Wischvorrichtung zumindest nach Anspruch 1, **dadurch gekennzeichnet, dass** die Wischstange (12h) über ein Filmscharnier (26h) schwenkbar gelagert ist.

7. Wischvorrichtung zumindest nach Anspruch 1, **dadurch gekennzeichnet, dass** die Wischstange (12i) wenigstens einen Bereich (28i) mit einer geringeren Biegesteifigkeit aufweist, der als Scharnier nutzbar ist.

## Claims

1. Wiper device, in particular for a motor vehicle, the wiper device having a wiper arm (10a-10i) with at least one spring-elastic subregion, which wiper arm, during operation, is substantially arranged bent precisely in such a manner that a bearing force of a wiper blade against a surface to be wiped is brought about, and which comprises a wiper rod (12a-12i) and a fastening unit (14a-14i) connected to the wiper rod (12a-12i), wherein, at that end of the fastening unit (14a-14i) which faces the free end of the wiper arm (10a-10i), at least the wiper rod (12a-12i) is designed so as to be deflectable from the operating position thereof at least in the direction (16a-16i) of a plane defined by a surface to be wiped, at least in the event of a collision with an object (K), **characterized in that** the fastening unit (14a) and/or the wiper rod have/has at least one predetermined breaking point (18a) for permitting the deflection in the event of a collision and/or at least the wiper rod (12f-12i) is designed so as to be mounted pivotably from the operating position thereof in the direction (16f-16i) of the plane defined by the surface to be wiped, at least in the event of a collision.

2. Wiper device according to Claim 1, **characterized in that** the wiper rod (12f-12i) is restricted in the operating position thereof in the movement thereof in a direction (20f-20i) facing away from the plane by means of a stop (22f-22i).

3. Wiper device according to Claim 1 or 2, **characterized in that** the wiper rod (12g-12i) is mounted pivotably relative to the fastening unit (14g-14i).

4. Wiper device according to Claim 3, **characterized in that** the wiper rod (12g) is mounted pivotably in a component of the fastening unit (14g).

5. Wiper device according to Claim 4, **characterized in that** a bearing spindle (24g) is integrally formed on the wiper rod (12g).

6. Wiper device at least according to Claim 1, **characterized in that** the wiper rod (12h) is mounted pivotably via a film hinge (26h).

7. Wiper device at least according to Claim 1, **characterized in that** the wiper rod (12i) has at least one region (28i) of lower flexural rigidity, which region can be used as a hinge.

## Revendications

1. Système d'essuie-glace, en particulier pour un véhicule automobile, qui présente un bras d'essuie-glace (10a - 10i) avec au moins une région partielle élastique à ressort, qui est disposée pendant le fonctionnement sensiblement de manière courbée de telle sorte qu'une force d'appui d'un balai d'essuie-glace sur une surface à essuyer soit appliquée, et qui comprend une tige d'essuie-glace (12a - 12i) et une unité de fixation (14a - 14i) connectée à la tige d'essuie-glace (12a - 12i), dans lequel, à l'extrémité de l'unité de fixation (14a - 14i) tournée vers l'extrémité libre du bras d'essuie-glace (10a - 10i), au moins la tige d'essuie-glace (12a - 12i) est réalisée de manière à pouvoir être déviée au moins pour une situation de collision avec un objet (K) hors de sa position de fonctionnement au moins dans la direction (16a - 16i) d'un plan tendu par une surface à essuyer, **caractérisé en ce que** l'unité de fixation (14a) et/ou la tige d'essuie-glace présentent au moins un point destiné à la rupture (18a) pour permettre la déviation dans le cas d'une collision, et/ou au moins la tige d'essuie-glace (12f - 12i) est réalisée de manière supportée, au moins dans le cas d'une collision, de manière à pouvoir pivoter hors de sa position de fonctionnement dans la direction (16f - 16i) du plan tendu par la surface à essuyer.

2. Dispositif d'essuie-glace selon la revendication 1, **caractérisé en ce que** la tige d'essuie-glace (12f - 12i), dans sa position de fonctionnement, est limitée dans son mouvement par une butée (22f - 22i) dans une direction (20f - 20i) opposée au plan.

3. Dispositif d'essuie-glace selon la revendication 1 ou 2, **caractérisé en ce que** la tige d'essuie-glace (12g - 12i) est montée de manière à pouvoir pivoter par rapport à l'unité de fixation (14g - 14i).

4. Dispositif d'essuie-glace selon la revendication 3, **caractérisé en ce que** la tige d'essuie-glace (12g) est montée de manière à pouvoir pivoter dans un composant de l'unité de fixation (14g).

5. Dispositif d'essuie-glace selon la revendication 4, **caractérisé en ce qu'**un axe de palier (24g) est façonné sur la tige d'essuie-glace (12g).

6. Dispositif d'essuie-glace selon au moins la revendication 1, **caractérisé en ce que** la tige d'essuie-glace (12h) est montée de manière à pouvoir pivoter par le biais d'une charnière à film (26h).

7. Dispositif d'essuie-glace selon au moins la revendication 1, **caractérisé en ce que** la tige d'essuie-glace (12i) présente au moins une région (28i) avec une rigidité en flexion relativement faible, qui peut être utilisée en tant que charnière.
